# EUROPEAN PATENT APPLICATION

(11) **EP 1 879 377 A2**
(43) Date of publication of application: **16.01.2008**
(21) Application number: 07110639.7
(22) Date of filing: 20.06.2007
(51) Int. Cl.: H04N 5/21

(54) **Portable Device**

(30) Priority: 13.07.2006 JP 2006192321; 05.09.2006 JP 2006239843
(71) Applicant: MATSUSHITA ELECTRIC INDUSTRIAL CO., LTD, Kadoma-shi, Osaka 571-8501 (JP)
(72) Inventor: Kitamura, Hirokazu c/oMatsushita Electric Industrial Co., Ltd., Shiromi 1-chome, Chuoku Osaka-shi, Osaka 540-6319 (JP); Inagaki, Junji c/oMatsushita Electric Industrial Co., Ltd., Shiromi 1-chome, Chuoku Osaka-shi, Osaka 540-6319 (JP); Miyake, Eiji c/oMatsushita Electric Industrial Co., Ltd., Shiromi 1-chome, Chuoku Osaka-shi, Osaka 540-6319 (JP); Fujishima, Akira c/oMatsushita Electric Industrial Co., Ltd., Shiromi 1-chome, Chuoku Osaka-shi, Osaka 540-6319 (JP)
(74) Representative: Grünecker, Kinkeldey, Stockmair & Schwanhäusser Anwaltssozietät

(57) **Abstract**

A portable device has a main body and an image receiver detachable from the main body. The image receiver includes an antenna, an antenna matching unit, and a tuner provided in that order from the input side. The image receiver further includes a noise cancelling unit, which supplies a noise-cancelling signal to between the antenna matching unit and the tuner.

## Description

### BACKGROUND OF THE INVENTION

### 1. Field of the Invention

The present invention relates to portable devices such as portable phones, portable game consoles, portable computers, and portable electronic dictionaries having a display unit and an image forming unit so that the display unit displays images in accordance with a signal from the image forming unit.

### 2. Background Art

In recent years, portable devices are increasingly lighter in weight and smaller in size with miniaturization of their parts and high integration of the semiconductor element. Such portable devices have been provided with more and more improved features. For example, Japanese Patent Unexamined Publication No.08-237154 discloses some portable devices that have a card-type image receiver which receives television broadcasting and is detachable from the portable devices.

While the portable devices are becoming increasingly convenient as described above, noise signal caused by portable devices has been becoming a problem.

More specifically, these portable devices with such improved features generally have a clock signal to provide the timing for operation. The clock signal or part of the harmonics of the clock signal sometimes cause interference in the image receiver, thereby greatly distorting the image and sound during the reception of television broadcasting.

In particular, in so-called one-segment broadcasting which has been started recently, a transmission signal is low power to prevent interference with analog signals. Therefore, when television broadcasting is received in a place having a low reception level of broadcasting wave, the clock signal or part of the harmonics of the clock signal from a portable device have relatively large influence. This may greatly distort the image and sound currently being received or even make it impossible to receive the broadcasting.

### SUMMARY OF THE INVENTION

The portable device of the present invention includes a main body having a display unit; an image forming unit which is provided in the main body and forms an image to be transmitted to the display unit; and an image receiver detachable from the main body. The image receiver includes an antenna, an antenna matching unit, and a tuner provided in that order from the input side, and further includes a noise cancelling unit. The noise cancelling unit supplies a noise-cancelling signal to between the antenna matching unit and the tuner.

In this portable device, even when its clock signal or part of the harmonics of the clock signal is induced into the antenna of the image receiver, the influence can be greatly reduced by a noise-cancelling signal supplied from the noise cancelling unit to between the antenna matching unit and the tuner.

The portable device of the present invention may be a portable device capable of diversity reception, including a main body having a display unit; an image forming unit which is provided in the main body and forms an image to be transmitted to the display unit; and an image receiver detachable from the main body and having a first antenna and a second antenna. The image receiver includes a first antenna, a first antenna matching unit, a first tuner, and a first demodulator provided in that order from one input. The image receiver further includes a second antenna, a second antenna matching unit, a second tuner, and a second demodulator provided in that order from the other input. The image receiver further includes a noise cancelling unit, which supplies a noise-cancelling signal to between the first antenna matching unit and the first tuner and between the second antenna matching unit and the second tuner.

In the portable device thus structured, even when its clock signal or part of the harmonics of the clock signal is induced into the first or second antenna of the image receiver, the influence can be greatly reduced by a noise-cancelling signal supplied from the noise cancelling unit to between the first antenna matching unit and the first tuner and between the second antenna matching unit and the second tuner.

### BRIEF DESCRIPTION OF THE DRAWINGS

Fig. 1 is a plan view of a portable device according to a first embodiment of the present invention.
Fig.2 is an electric block diagram of the portable device according to the first embodiment of the present invention.
Fig. 3 is another electric block diagram of the portable device according to the first embodiment of the present invention.
Fig. 4 is further another electric block diagram of the portable device according to the first embodiment of the present invention.
Fig.5 is a graph showing a receiving state of the portable device according to the first embodiment of the present invention.
Fig. 6 is a plan view of a portable device having another structure according to the first embodiment of the present invention.
Fig. 7 is a plan view of a portable device according to a second embodiment of the present invention.
Fig. 8 is an electric block diagram of the portable device according to the second embodiment of the present invention.
Fig. 9 is another electric block diagram of the portable device according to the second embodiment of the present invention.
Fig. 10 is further another electric block diagram of the portable device according to the second embodiment of the present invention.
Fig. 11 is a graph showing a receiving state of the portable device according to the second embodiment of the present invention.
Fig. 12 is a plan view of a portable device having another structure according to the second embodiment of the present invention.

### DETAILED DESCRIPTION OF THE INVENTION

Embodiments of the present invention are described as follows with reference to drawings.

### FIRST EMBODIMENT

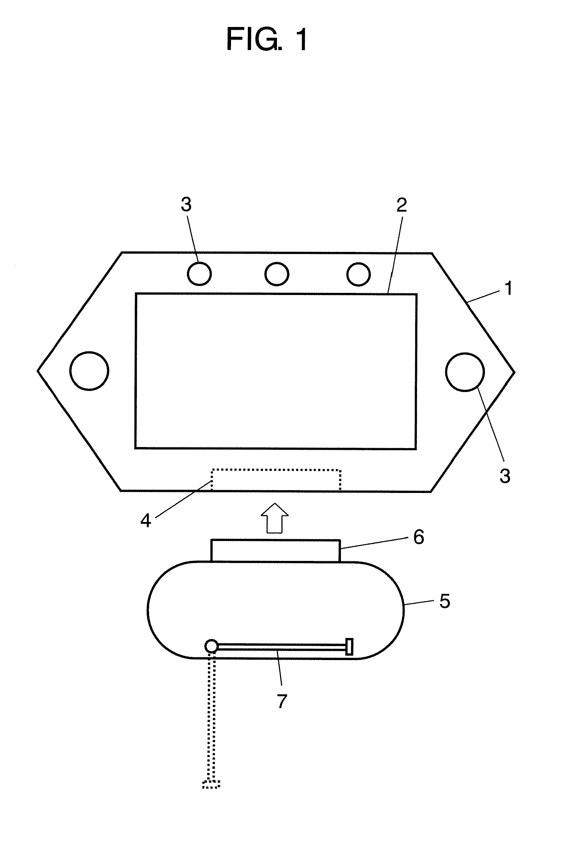

Fig. 1 is a plan view of a portable device according to a first embodiment of the present invention. The portable device can be a portable phone, a portable game console, a portable computer, a portable electronic dictionary, or the like. In Fig. 1, main body 1 of the portable device is provided on its surface with liquid crystal display unit 2 and various kinds of operation buttons 3.

Main body 1 is provided on a side thereof with insertion slot 4 to and from which plug 6 of image receiver 5 can be attached and detached. When watching television on display unit 2 of main body 1, the user inserts plug 6 of image receiver 5 into insertion slot 4 first. Next, the user pulls out antenna 7 of image receiver 5 and sets it to be perpendicular to main body 1 as shown by dotted lines. Then, the user selects a desired channel by operating operation buttons 3 so as to view a desired program. Thus, main body 1 of the portable device is provided with the feature of receiving television broadcasting.

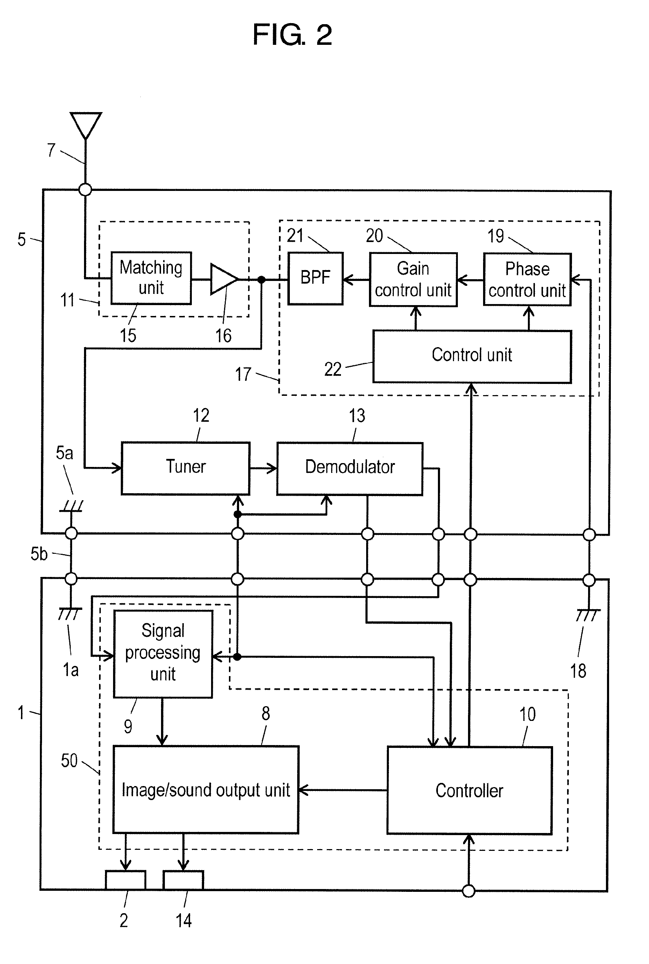

Fig. 2 is an electric block diagram of an essential part of the portable device according to the present embodiment. Main body 1 includes image/sound output unit 8, which outputs image and sound to display unit 2. Image/sound output unit 8 is connected to signal processing unit 9 and controller 10. In main body 1, at least image/sound output unit 8, signal processing unit 9, and controller 10 compose image forming unit 50, which forms images to be transmitted to display unit 2.

Image receiver 5 includes noise cancelling unit 17 connected to first earth 18 of main body 1. At the input side of image receiver 5 are connected antenna 7, antenna matching unit 11, tuner 12, and demodulator 13 in that order. Antenna 7 receives, for example, UHF band television broadcast channels. Tuner 12 selects one of the UHF band channels thus received and transmits the selected UHF band channel to demodulator 13. Demodulator 13 demodulates the modulated TV signal and outputs it to signal processing unit 9.

Main body 1 and image receiver 5 are connected to each other via signal lines and control lines. In addition, second earth 1a of main body 1 and third earth 5a of image receiver 5 are connected to each other via earth line 5b.

An output signal of demodulator 13 is processed by signal processing unit 9 and supplied to image/sound output unit 8. As a result, the user can watch television using display unit 2 and speaker 14. Controller 10 controls each unit in main body 1 and in image receiver 5.

In image receiver 5, antenna matching unit 11 is formed of matching unit 15 and subsequent amplifier 16. Antenna matching unit 11 enables antenna 7 to have high receiving sensitivity regardless of its being short and also achieves impedance matching.

Image receiver 5 further includes noise cancelling unit 17, which is connected between antenna matching unit 11 and tuner 12. Noise cancelling unit 17 supplies a noise-cancelling signal to between antenna matching unit 11 and tuner 12.

Noise cancelling unit 17 is formed of control unit 22, phase control unit 19, gain control unit 20, and bandpass filter (hereinafter abbreviated as BPF) 21. Phase control unit 19 is connected to first earth 18 of main body 1 of the portable device so that the same noise signal as that to be induced into antenna 7 from main body 1 is supplied to phase control unit 19. Phase control unit 19 adjusts the phase of the received noise signal and outputs the phase-adjusted noise signal to gain control unit 20. Gain control unit 20 adjusts the level of the received noise signal and outputs the level-adjusted noise signal to BPF 21. BPF 21 passes only a UHF band noise signal by removing unnecessary frequencies out of the received noise signal and outputs the UHF band noise signal. On the other hand, control unit 22 receives a signal from controller 10 so as to control phase control unit 19 and gain control unit 20. In this manner, the noise-cancelling signal can be produced by adjusting the phase and the level of the same noise signal as that to be induced into antenna 7.

The production of the noise-cancelling signal is not limited to the structure shown in the present embodiment and can be achieved by adjusting the phase and the level of the same noise signal as that to be induced into antenna 7 at each frequency. Alternatively, a signal having a phase opposite to and a level the same as the noise associated with the received signal can be synthesized by a signal synthesizer. Thus, in the present embodiment, noise cancelling unit 17 can cancel the noise which propagates to antenna 7 from image forming unit 50 of main body 1.

As the noise-cancelling signal to be supplied to noise cancelling unit 17, the noise signal superimposed to first earth 18 of main body 1 can be used instead of the noise signal superimposed to second earth 1a of main body 1.

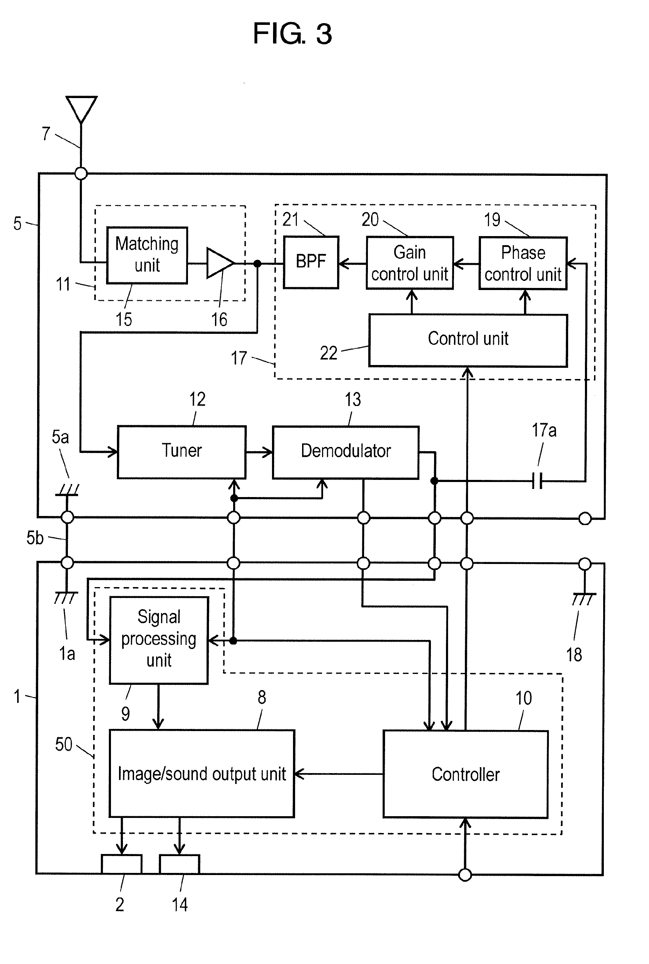

Fig. 3 is another electric block diagram of the portable device according to the present embodiment. In this example, as the noise-cancelling signal to be supplied to noise cancelling unit 17, the noise signal superimposed to at least one of the signal lines and the control lines connecting main body 1 and image receiver 5 is supplied via coupling capacitor 17a.

Coupling capacitor 17a can have a capacitance value of, for example, 1 to 20 pF to pass a UHF band signal. The noise signal superimposed to the signal lines and the control lines are large enough for noise cancelling unit 17 because of having a larger signal level than the noise signal superimposed to first earth 18. Furthermore, the use of coupling capacitor 17a having a small capacitance hardly affects the signal lines and control lines which deal with much lower frequencies than the UHF band.

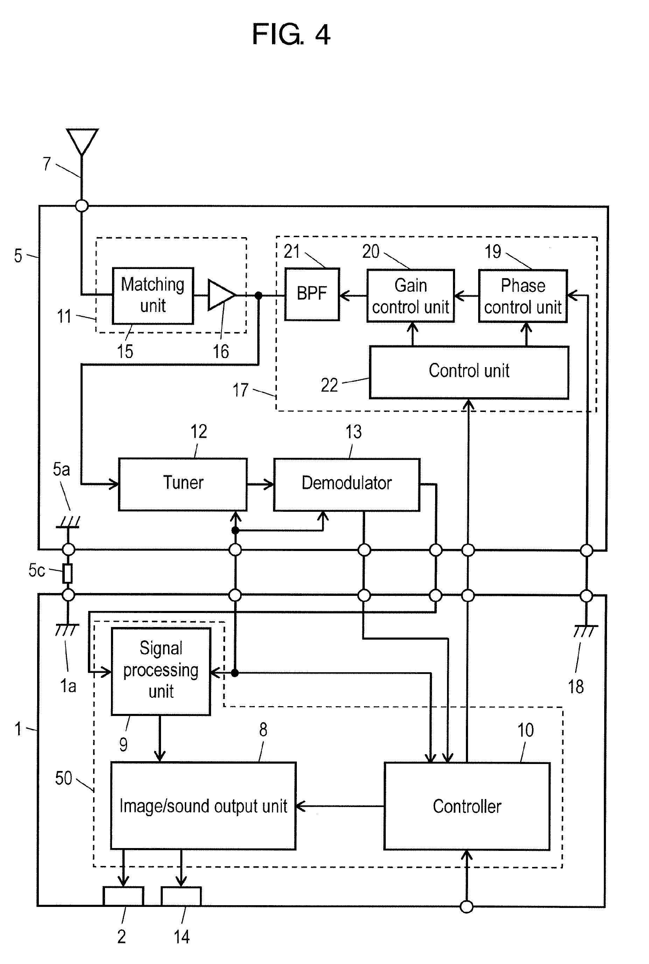

Fig. 4 is further another electric block diagram of the portable device according to the present embodiment. In this example, phase control unit 19 is connected to first earth 18 of main body 1 of the portable device. Consequently, as the noise-cancelling signal to be supplied to noise cancelling unit 17, the noise signal superimposed to first earth 18 of main body 1 is detected and supplied. The noise signal includes the noise signal generated from image forming unit 50. Between second earth 1a of main body 1 and third earth 5a of image receiver 5 is provided impedance element 5c instead of earth line 5b shown in Fig. 2.

Impedance element 5c can be a high-frequency choke coil which blocks a UHF band signal and allows a UHF band signal to have high attenuation characteristics. Alternatively, impedance element 5c can include a conductor which connects second earth 1a and third earth 5a and has a ferrite core inserted thereinto so as to block a UHF band signal. This enables a signal over a wide range of frequencies to have high attenuation characteristics.

The use of impedance element 5c in this manner connects main body 1 and image receiver 5 in series, but disconnects them at frequencies higher than the UHF band. In other words, the noise signal is supplied not via second earth 1a but via first earth 18 because the noise signal has a frequency of the UHF band. This makes it possible to supply a noise signal having a large magnitude to noise cancelling unit 17.

This noise signal is then phase-adjusted by phase control unit 19 and level-adjusted by gain control unit 20 so as to cancel noise. Finally, a noise-cancelling signal is supplied to between antenna matching unit 11 and tuner 12 via BPF 21, which passes a UHF band signal.

Control unit 22 of noise cancelling unit 17 performs the phase adjustment of a noise signal through the phase control by phase control unit 19 and also performs the level adjustment of the noise signal through the gain control by gain control unit 20.

Control unit 22 supplies the noise-cancelling signal produced by noise cancelling unit 17 to between antenna matching unit 11 and tuner 12. Therefore, even when a noise signal is induced into antenna 7 from main body 1 , the noise signal is substantially cancelled by the noise-cancelling signal having a phase opposite to and a level the same as the noise signal. As a result, the influence of the noise signal induced into antenna 7 from main body 1 can be greatly reduced.

The noise signal induced into antenna 7 from main body 1 causes interference when the level of the reception signal of antenna 7 is low. Therefore, when the level of the reception signal is sufficiently high and satisfactory, it is unnecessary to operate noise cancelling unit 17. For example, the start and stop operation of noise cancelling unit 17 can be controlled based on signal quality data outputted from demodulator 13 or signal processing unit 9. This can eliminate unnecessary power consumption. The signal quality data can be a BER, a C/N, or the like.

The output of noise cancelling unit 17 is connected to the connection point between antenna matching unit 11 and tuner 12. The output impedance of antenna matching unit 11 is set to or around 75 Ω, which is the input impedance of tuner 12. The output impedance of noise cancelling unit 17, on the other hand, is as high as 6 kΩ, for example. Such a high output impedance of noise cancelling unit 17 hardly affects the input impedance 75 Ω of tuner 12, which is connected to noise cancelling unit 17. In other words, the receiving sensitivity of tuner 12 is never damaged by noise cancelling unit 17.

Similar advantages can be obtained by connecting the output of noise cancelling unit 17 to between the input of tuner 12 and the input of a gain control unit (unillustrated) included in tuner 12.

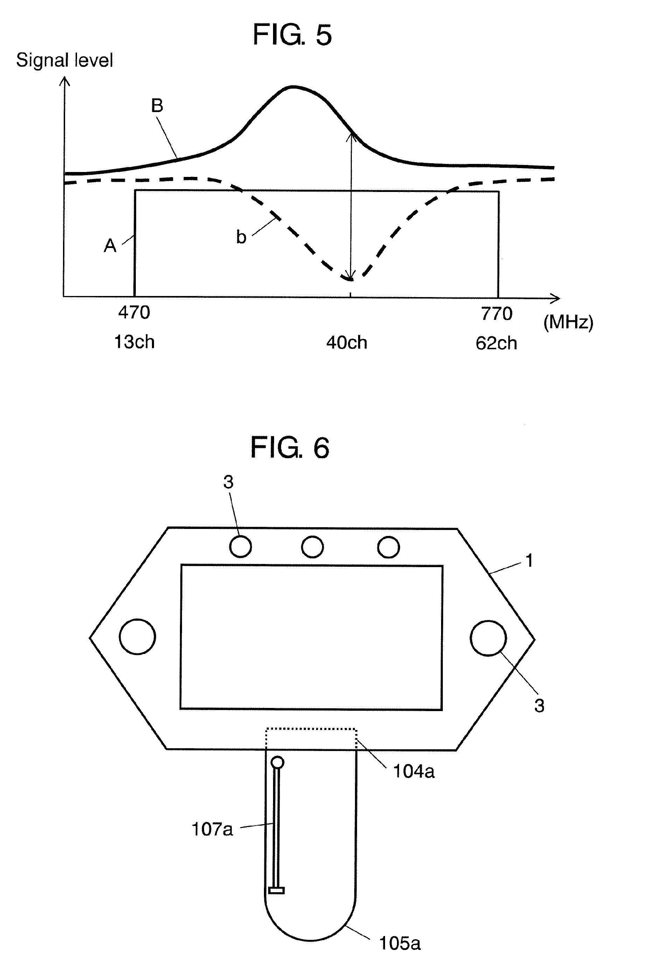

Fig.5 is a graph showing a receiving state of the portable device according to the present embodiment. The graph shows a noise signal in television broadcasting, which is so-called one-segment broadcasting. In the graph, the horizontal axis represents channel numbers and frequencies, and the vertical axis represents signal levels. In one-segment broadcasting, a frequency band from 470 MHz to 770 MHz is divided into 6 MHz channels each of which carries one channel. In the present embodiment, channel 40 is being received.

As shown in Fig.5, reception signal level "A" represents the signal level of a reception signal in the present use environment. Noise signal level "B" represents the signal level of the noise induced into antenna 7 from main body 1. In a state where noise is not cancelled, noise signal level "B" is much larger than reception signal level "A", so that channel 40 desired by the user cannot be received.

In the present embodiment, a noise-cancelling signal is supplied to between antenna matching unit 11 and tuner 12. As a result, as shown by dotted line "b", noise signal level "B" becomes sufficiently smaller than reception signal level "A", thereby clearly receiving channel 40 desired by the user. As shown by dotted line "b", noise signal level "B" in the vicinity of channel 40 is reduced. This is because noise signal which propagates from image forming unit 50 to antenna 7 changes its phase and level depending on the frequency (channel). Therefore, it is necessary to control noise cancelling unit 17 in accordance with the channel to be received.

More specifically, controller 10 knows that channel 40 is being tried to be received. Therefore, controller 10 controls phase control unit 19 to perform phase adjustment and gain control unit 20 to perform level adjustment, thereby selectively reducing the channel 40 region of noise signal level "B".

Fig. 6 is a plan view of a portable device having another structure according to the present embodiment. In this example, image receiver 105a, which is of vertical type, is inserted into insertion slot 104a of main body 1.

In vertical image receiver 105a, antenna 107a is already perpendicular to main body 1 when image receiver 105a is inserted into insertion slot 104a of main body 1. This makes it hard for noise signal to be induced into antenna 107a from main body 1.

### SECOND EMBODIMENT

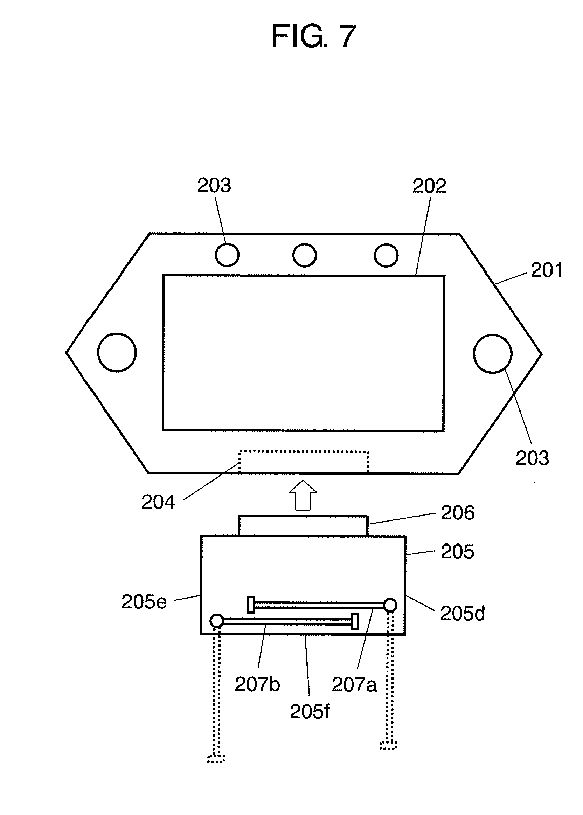

Fig. 7 is a plan view of a portable device according to a second embodiment of the present invention. The portable device can be a portable phone, a portable game console, a portable computer, a portable electronic dictionary, or the like. In Fig. 7, main body 201 of the portable device is provided on its surface with liquid crystal display unit 202 and various kinds of operation buttons 203.

Main body 201 is provided on a side thereof with insertion slot 204 to and from which plug 206 of image receiver 205 can be attached and detached. Image receiver 205 has side 205d adjacent to plug 206 and having first antenna 207a thereon, side 205e adjacent to plug 206 and having second antenna 207b thereon, and side 205f opposite to plug 206.

When watching television on display unit 202 of main body 201, the user inserts plug 206 of image receiver 205 into insertion slot 204 first. Next, the user pulls out first antenna 207a and second antenna 207b of image receiver 205 and sets them to be perpendicular to main body 201 as shown by dotted lines. Then, the user selects a desired channel by operating operation buttons 203 so as to view a desired program. Thus, main body 201 of the portable device is provided with the feature of receiving television broadcasting.

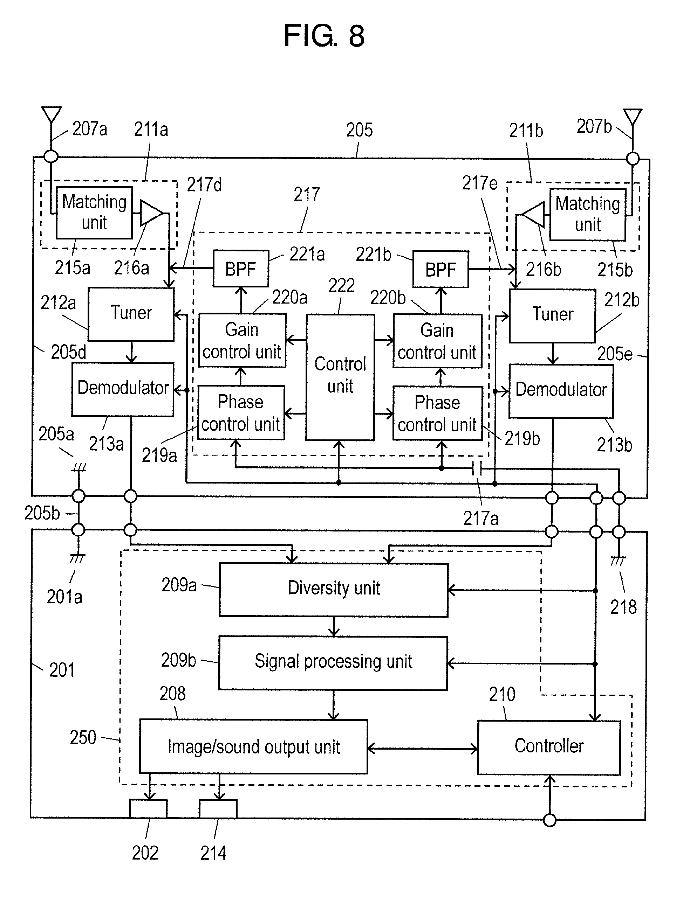

Fig. 8 is an electric block diagram of an essential part of the portable device according to the present embodiment. Main body 201 includes image/sound output unit 208, which outputs image and sound to display unit 202. Image/sound output unit 208 is connected to signal processing unit 209b and controller 210. Signal processing unit 209b and controller 210 are connected to diversity unit 209a. In main body 201, at least image/sound output unit 208, signal processing unit 209b, controller 210, and diversity unit 209a compose image forming unit 250, which forms images to be transmitted to display unit 202.

In noise cancelling unit 217 of image receiver 205, first phase control unit 219a and second phase control unit 219b are supplied with a noise signal from first earth 218 of main body 201 of the portable device via coupling capacitor 217a. At one of the input sides of image receiver 205 are connected first antenna 207a, first antenna matching unit 211a, first tuner 212a, and first demodulator 213a in that order. At the other of the input sides of image receiver 205 are connected second antenna 207b, second antenna matching unit 211b, second tuner 212b, and second demodulator 213b in that order.

Main body 201 and image receiver 205 are connected to each other via signal lines and control lines. In addition, second earth 201a of main body 201 and third earth 205a of image receiver 205 are connected to each other via earth line 205b.

An output signal of first demodulator 213a and an output signal of second demodulator 213b are transmitted to diversity unit 209a in which one of the signals is selected or both are synthesized. The selected or synthesized signal is processed in signal processing unit 209b and supplied to image/sound output unit 208, so that the user can watch television using display unit 202 and speaker 214.

In image receiver 205, first antenna matching unit 211a is formed of first antenna 207a-side matching unit 215a and subsequent amplifier 216a. First antenna matching unit 211a enables first antenna 207a to have high receiving sensitivity regardless of its being short and also achieves impedance matching.

Second antenna matching unit 211b has the same structure as first antenna matching unit 211a. Second antenna matching unit 211b is formed of second antenna 207b-side matching unit 215b and subsequent amplifier 216b. Second antenna matching unit 211b enables antenna 207b to have high receiving sensitivity regardless of its being short and also achieves impedance matching.

In image receiver 205 thus structured, output 217d of noise cancelling unit 217 is connected to between first antenna matching unit 211a and first tuner 212a. Similarly, output 217e of noise cancelling unit 217 is connected to between second antenna matching unit 211b and second tuner 212b. In this manner, noise cancelling unit 217 allows a noise-cancelling signal to be supplied to between first antenna matching unit 211a and first tuner 212a and between second antenna matching unit 211b and second tuner 212b.

In noise cancelling unit 217, first phase control unit 219a and second phase control unit 219b are each supplied with a noise signal from first earth 218 of main body 201 of the portable device via coupling capacitor 217a. Noise cancelling unit 217 produces a noise-cancelling signal by adjusting the phase and the level of the noise signal. As a result, the noise signal detected from first earth 218 of main body 201 can be the same type of signal as the signal that is directly induced into first antenna 207a and second antenna 207b from main body 201. In other words, noise cancelling unit 217 can cancel the noise which propagates to first antenna 207a and second antenna 207b from image forming unit 250 of main body 201.

The noise signal is phase-adjusted so that noise cancelling can be performed by first and second phase control units 219a and 219b. Then, the noise signal is level-adjusted so that noise cancelling can be performed by first and second gain control units 220a and 220b. The noise-cancelling signal thus phase- and level-adjusted is supplied to between first antenna matching unit 211a and first tuner 212a and between second antenna matching unit 211b and second tuner 212b via bandpass filters 221a and 221b, respectively, which pass a UHF band signal.

In this manner, control unit 222 of noise cancelling unit 217 performs the phase adjustment of a noise signal through the phase control by first and second phase control units 219a and 219b and also performs the level adjustment of the noise signal through the gain control by first and second gain control units 220a and 220b.

The noise-cancelling signal produced by noise cancelling unit 217 is supplied to between first antenna matching unit 211a and first tuner 212a, and between second antenna matching unit 211b and second tuner 212b. Therefore, even when a noise signal is induced into first antenna 207a and second antenna 207b from main body 201, the noise signal is substantially cancelled by a noise-cancelling signal having a phase opposite to and a level nearly the same as the noise signal. As a result, the influence of the noise signal induced into first antenna 207a and second antenna 207b from main body 201 can be greatly reduced.

Coupling capacitor 217a can have a capacitance value of, for example, 1 to 20 pF to pass a UHF band signal. Coupling capacitor 217a can be replaced by a filter. Using a filter enables the selection of a noise signal having a required frequency, thereby improving the precision of phase adjustment and level adjustment in noise cancelling unit 217. As a result, the interference of a noise signal can be prevented with higher precision.

The noise signal to noise cancelling unit 217 can be supplied via second earth 201a of main body 201 instead of first earth 218 of main body 201.

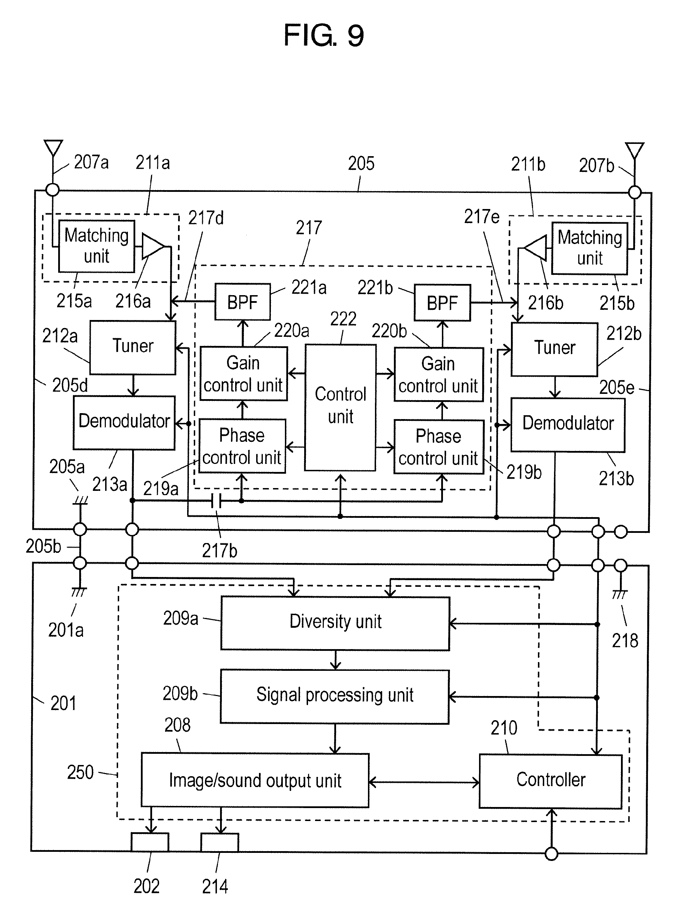

Fig. 9 is another electric block diagram of the portable device according to the present embodiment. In this example, in order to supply a noise signal to noise cancelling unit 217, there is provided coupling capacitor 217b in the signal line that connects main body 201 and image receiver 205. More specifically, the output of first demodulator 213a is connected to first and second phase control units 219a and 219b via coupling capacitor 217b. Alternatively, the output of second demodulator 213b can be connected to first and second phase control units 219a and 219b via coupling capacitor 217b. Thus, noise cancelling unit 217 only has to detect a noise signal from the output of at least one of first demodulator 213a and second demodulator 213b. The noise signal can be supplied to noise cancelling unit 217 by one of the signal lines and the control lines via coupling capacitor 217b.

The noise signal superimposed to the signal lines and the control lines is large enough for noise cancelling unit 217 because of having a larger signal level than the noise signal superimposed to first earth 218. Furthermore, the use of coupling capacitor 217b having a small capacitance hardly affects the signal lines and control lines which deal with much lower frequencies than the UHF band.

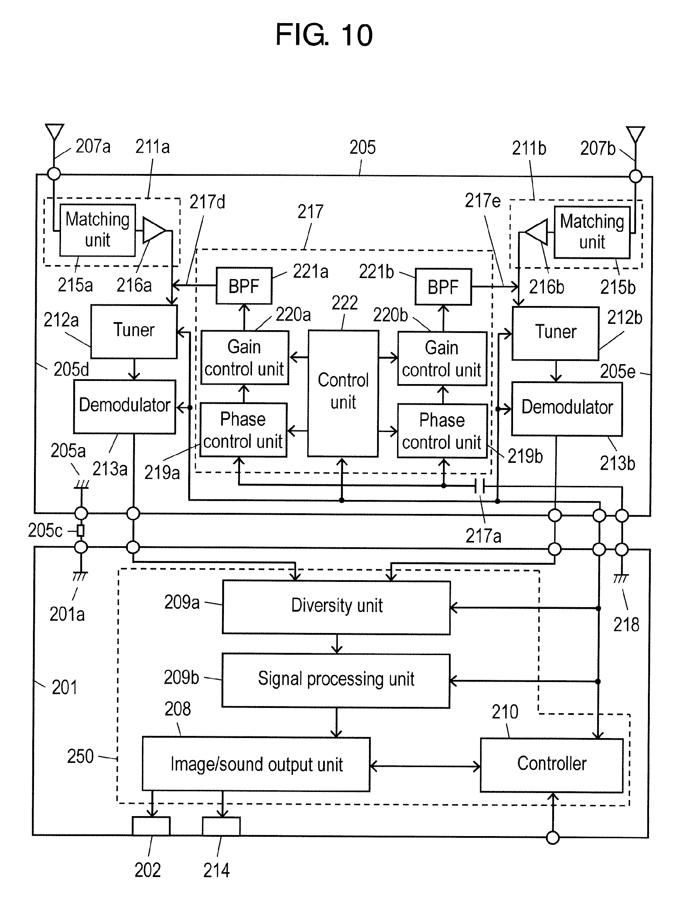

Fig. 10 is further another electric block diagram of the portable device according to the present embodiment. In this example, a noise signal to noise cancelling unit 217 is detected and supplied from first earth 218 of main body 201 via coupling capacitor 217a. Between second earth 201a of main body 201 and third earth 205a of image receiver 205 is provided impedance element 205c instead of earth line 205b shown in Fig. 8.

Impedance element 205c can be a high-frequency choke coil which blocks a UHF band signal and allows a UHF band signal to have high attenuation characteristics. Alternatively, impedance element 205c can include a conductor which connects second earth 201a and third earth 205a and has a ferrite core inserted thereinto so as to block a UHF band signal. This enables a signal over a wide range of frequencies to have high attenuation characteristics.

The use of impedance element 205c in this manner connects main body 201 and image receiver 205 in series, but disconnects them at frequencies higher than the UHF band. In other words, the noise signal is supplied not via second earth 201a but via first earth 218 because the signal has a frequency of the UHF band. This makes it possible to supply a noise signal having a large magnitude to noise cancelling unit 217.

The noise signal induced into first antenna 207a and second antenna 207b from main body 201 causes interference when the level of the reception signals of first antenna 207a and second antenna 207b is low. Therefore, when the level of the reception signal is sufficiently high and satisfactory, it is unnecessary to operate noise cancelling unit 217. For example, the start and stop operation of noise cancelling unit 217 can be controlled based on signal quality data outputted from first and second demodulators 213a and 213b, diversity unit 209a, or signal processing unit 209b. This can eliminate unnecessary power consumption. The signal quality data can be a BER, a C/N, or the like.

The output of noise cancelling unit 217 is connected to the connection point between first antenna matching unit 211a and first tuner 212a, and the connection point between second antenna matching unit 211b and second tuner 212b. The output impedance of first and second antenna matching units 211a and 211b is set to or around 75 Ω, which is the input impedance of first and second tuners 212a and 212b. The output impedance of noise cancelling unit 217, on the other hand, is as high as 6 kΩ, for example. Such a high output impedance of noise cancelling unit 217 hardly affects the input impedance 75 Ω of first and second tuners 212a and 212b, which are connected to noise cancelling unit 217. In other words, the receiving sensitivity of first and second tuners 212a and 212b is never damaged by noise cancelling unit 217.

Similar advantages can be obtained by connecting the output of noise cancelling unit 217 to between the input of first tuner 212a and the input of a gain control unit (unillustrated) included in first tuner 212a, and also to between the input of second tuner 212b and the input of a gain control unit (unillustrated) included in second tuner 212b.

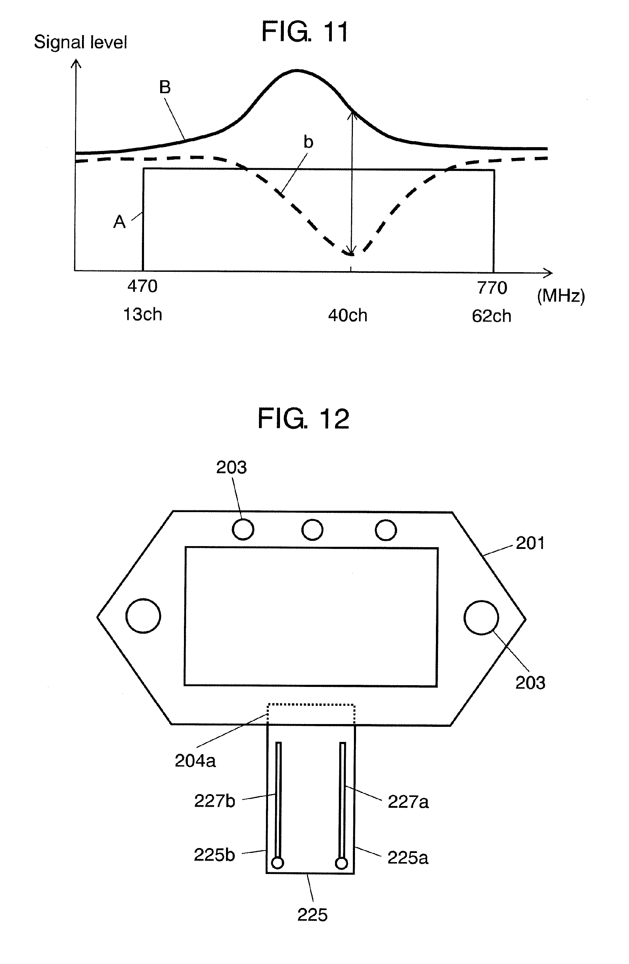

Fig. 11 is a graph showing a receiving state of the portable device according to the present embodiment. The graph shows a noise signal in television broadcasting, which is so-called one-segment broadcasting. In the graph, the horizontal axis represents channel numbers and frequencies, and the vertical axis represents signal levels. In one-segment broadcasting, a frequency band from 470 MHz to 770 MHz is divided into 6 MHz channels each of which carries one channel. In the present embodiment, channel 40 is being received.

As shown in Fig. 11, reception signal level "A" represents the signal level of a reception signal in the present use environment. Noise signal level "B" represents the signal level of the noise induced into antenna 207a or 207b from main body 201. In a state where noise is not cancelled, noise signal level "B" is much larger than reception signal level "A", so that channel 40 desired by the user cannot be received.

In the present embodiment, a noise-cancelling signal is supplied to between first antenna matching unit 211a and first tuner 212a, and between second antenna matching unit 211b and second tuner 212b. As a result, as shown by dotted line "b", noise signal level "B" becomes sufficiently smaller than reception signal level "A", thereby clearly receiving channel 40 desired by the user. As shown by dotted line "b", noise signal level "B" in the vicinity of channel 40 is reduced. This is because noise signal which propagates from image forming unit 250 to first and second antennas 207a and 207b changes its phase and level depending on the frequency (channel). Therefore, it is necessary to control noise cancelling unit 217 in accordance with the channel to be received.

More specifically, controller 210 knows that channel 40 is being tried to be received. Therefore, controller 210 controls first and second phase control units 219a and 219b to perform phase adjustment and first and second gain control units 220a and 220b to perform level adjustment, thereby selectively reducing the channel 40 region of noise signal level "B".

In this manner, controller 210 controls the reception channels of first and second tuners 212a and 212b and further controls control unit 222 of noise cancelling unit 217, thereby controlling and optimizing the phase of each of first and second phase control units 219a and 219b, and the gain of each of first and second gain control units 220a and 220b.

As described above, controller 210 stores the optimized data of phase and gain per channel. The next time a channel is received, controller 210 can control the phase and gain of noise cancelling unit 217 per reception channel based on the optimized data of phase and gain thus stored. The optimizing control enables a channel desired by the user to be received clearly in a short time.

Fig. 12 is a plan view of a portable device having another structure according to the present embodiment. In this example, image receiver 225, which is of vertical type, is inserted into insertion slot 204a of main body 201. First antenna 227a and second antenna 227b are disposed close and parallel to sides 225a and 225b, respectively, which are adjacent to insertion slot 204a of image receiver 225.

In vertical image receiver 225, first and second antennas 227a and 227b are already perpendicular to main body 201 when image receiver 225 is inserted into insertion slot 204a of main body 201. This makes it hard for a noise signal to be induced into first and second antennas 227a and 227b from main body 201.

First and second antennas 227a and 227b can be microstrip lines formed on a substrate. This prevents a noise signal from being induced into first and second antennas 227a and 227b having a planar shape from main body 201.

### INDUSTRIAL APPLICABILITY

As described hereinbefore, in a portable device of the present invention, even when its clock signal or part of the harmonics of the clock signal is induced into the antenna of the image receiver during the reception of a television signal, the influence can be greatly reduced by a noise-cancelling signal of the noise cancelling unit. Thus, the portable device of the present invention can be used as a portable phone, a portable game console, a portable computer, a portable electronic dictionary or the like that has the feature of receiving a television signal.

## Claims

1. A portable device comprising:
a main body having a display unit;
an image forming unit in the main body, the image forming unit forming an image to be transmitted to the display unit; and
an image receiver detachable from the main body, the image receiver including:
a noise cancelling unit; and
an antenna, an antenna matching unit, and a tuner provided in that order from an input side, wherein
the noise cancelling unit supplies a noise-cancelling signal to between the antenna matching unit and the tuner.

2. The portable device of claim 1, wherein
the noise cancelling unit cancels a noise signal propagating from the image forming unit in the main body to the antenna.

3. The portable device of claim 2, wherein
the noise cancelling unit detects the noise signal from at least one of a signal line and a control line, the signal line and the control line connecting between the main body and the image receiver, and the noise signal being generated from the image forming unit.

4. The portable device of claim 2, wherein
the main body further has a first earth;
the noise cancelling unit detects the noise signal from the first earth of the main body, the noise signal being generated from the image forming unit.

5. The portable device of claim 4, wherein
the main body further has a second earth;
the image receiver further has a third earth; and
the second earth of the main body and the third earth of the image receiver have an impedance element therebetween, the impedance element blocking a UHF band signal.

6. The portable device of claim 5, wherein
the impedance element includes a high-frequency choke coil.

7. The portable device of claim 5, wherein
the impedance element includes a conductor having a ferrite core inserted thereinto.

8. The portable device of claim 1, wherein
the portable device is a two-input portable device capable of diversity reception;
the antenna includes a first antenna and a second antenna;
the antenna matching unit includes a first antenna matching unit and a second antenna matching unit; and
the tuner includes a first tuner and a second tuner;
the first antenna, the first antenna matching unit, the first tuner, and the first demodulator are provided in that order from one of the two inputs;
the second antenna, the second antenna matching unit, the second tuner, and the second demodulator are provided in that order form the other of the two inputs;
the noise cancelling unit supplies a noise-cancelling signal to between the first antenna matching unit and the first tuner and between the second antenna matching unit and the second tuner.

9. The portable device of claim 8, wherein
the noise cancelling unit cancels a noise signal propagating from the image forming unit in the main body to the first antenna and the second antenna.

10. The portable device of claim 8, wherein
the noise cancelling unit includes:
a first phase control unit and a second phase control unit each receiving a noise signal;
a first gain control unit connected to an output of the first phase control unit, the first gain control unit outputting a noise-cancelling signal;
a second gain control unit connected to an output of the second phase control unit, the second gain control unit outputting a noise-cancelling signal; and
a control unit controlling a phase of the first phase control unit, a phase of the second phase control unit, a gain of the first gain control unit, and a gain of the second gain control unit.

11. The portable device of claim 9, wherein
the noise cancelling unit detects the noise signal from at least one of a signal line and a control line, the signal line and the control line connecting between the main body and the image receiver, and the noise signal being generated from the image forming unit.

12. The portable device of claim 9, wherein
the noise cancelling unit detects the noise signal from at least one of an output of the first demodulator and an output of the second demodulator.

13. The portable device of claim 9, wherein
the main body further has the first earth;
the noise cancelling unit detects a noise signal from the first earth of the main body, the noise signal being generated from the image forming unit.

14. The portable device of claim 13, wherein
the main body further has a second earth;
the image receiver further has a third earth; and
the second earth of the main body and the third earth of the image receiver have an impedance element therebetween, the impedance element blocking a UHF band signal.

15. The portable device of claim 14, wherein
the impedance element includes a high-frequency choke coil.

16. The portable device of claim 14, wherein
the impedance element includes a conductor having a ferrite core inserted thereinto.

17. The portable device of claim 8, wherein
the main body includes a controller, the controller storing optimized data of a phase of each of a first phase control unit and a second phase control unit and a gain of each of a first gain control unit and a second gain control unit, the optimized data being obtained from the noise cancelling unit per reception channel, thereby controlling the noise cancelling unit per reception channel based on the optimized data.
